# EUROPEAN PATENT SPECIFICATION

(11) **EP 0 367 975 B1**
(45) Date of publication and mention of the grant of the patent: **03.11.1993**
(21) Application number: 89118191.9
(22) Date of filing: 30.09.1989
(51) Int. Cl.: H02B 7/00

(54) **Prefabricated housing structure for substations**
Vorgefertigte Gehäusestruktur für Nebenstationen
Structure de coffret préfabriqué pour sous-station

(30) Priority: 05.11.1988 JP 279656/88
(43) Date of publication of application: 16.05.1990
(73) Proprietor: MITSUBISHI DENKI KABUSHIKI KAISHA, Tokyo (JP)
(72) Inventor: Sato, Mineo Itami Seisakusho Mitsubishi Denki K.K., Amagasaki City Hyogo Prefecture (JP)
(74) Representative: Hranitzky, Wilhelm Max

(56) References cited:
- EP-A- 0 271 830

## Description

### BACKGROUND OF THE INVENTION

This invention relates to a prefabricated type housing structure for substation electrical equipment as described in the introductory clause of claim 1.

Electric power substations generally comprise an assembly of electrical equipment for the transmission, transformation, distribution, and switching of the electric energy in an electric power system. Conventionally, the housing structures for accomodating the substation electrical equipment were built on the substation sites. This, however, entails much cost and labor; in addition, it is hard by this on-site building method to maintain high quality. Thus, housing structures for substation electrical equipment have already been proposed wherein factory-built housing units are assembled on the substation sites.

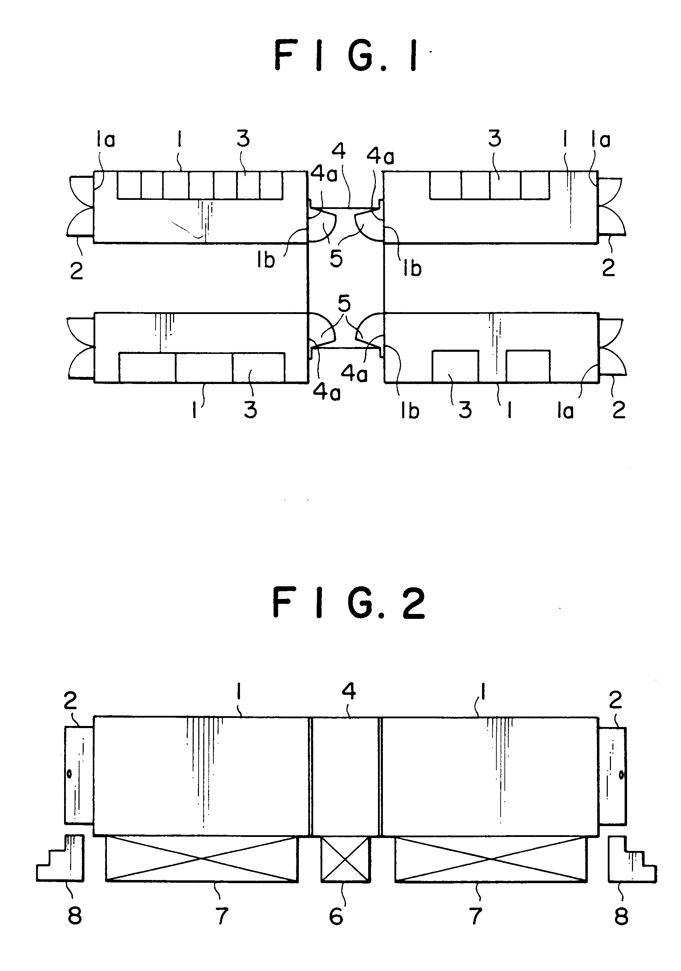

Figs. 1 and 2 show, in a plan and a front view respectively, an example of such a housing structure for substations, which is disclosed in Japanese laid-open utility model application No. 60-190106. In the figure, box members 1 (four in number in the figure) each consist of four side walls, a bottom plate, and a top plate (removed in the figure to show the interior); each box member 1 is provided with a pair of connection openings 1a and 1b, wherein the opening 1a at the exterior end is provided with a double-hinged door 2. Various kinds of electrical equipment 3 for the substation, such as the switchgear, monitoring and controlling boards, storage batteries, and air-conditioning equipment, are accomodated in the box members 1, in respective functional units or in units of appropriately combined functions. A passage unit 4 connecting the box members 1 consists of four side walls, a bottom plate, and a top plate (removed in the figure), and is provided with connection openings 4a to which doors 5 are attached; the passage unit 4 is coupled to the box members 1 by means of bolts via packings (both not shown in the figure) to prevent the intrusion of the rain water. Support bases 6 and 7 form the supports for the passage unit 4 and the box members 1 respectively; steps 8 are disposed at the doors 2 to allow the inspection personnel to enter into and go out of the box members 1. Each one of the box members 1 has such weight and such exterior dimensions as to allow its easy transportation.

The installation and assembly of the above housing structure are effected as follows. Before the installation thereof, the following are transported to the substation site: the box members 1 accomodating electrical equipment 3, the passage unit 4, support bases 6 and 7, and steps 8. Then, the support base 6 and the passage unit 4 are first installed; thereafter, the box members 1 are installed on their respective support bases 7 so as to be fitted to the connection openings 4a of the passage unit 4. In this connection, packings are inserted between the passage unit 4 and the box members 1 so as to render water-tight the connection between the two. Further, the ducts for the wiring and air-conditioning, etc., are coupled to each other between the connection openings 1b and 4a of the box members 1 and the passage unit 4, so that various units of the electrical equipment 3 may function as a single assembly of substation equipment. The steps 8 are positioned in front of the doors 2 so that the inspection personnel may enter into and go out of the box members 1 through the steps 8 and the doors 2.

The above housing structure for substations, however, has following disadvantages. Namely, the employment of the passage unit 4 for effecting the interconnection between the box members 1 not only makes it necessary to secure more space for its installment, but also entails much cost and labor; namely, when the box members 1 are installed, they must be positioned precisely with respect to the passage unit 4; further, the step of securing the water-tight connection between the passage unit 4 and the box members 1 requires time and labor. In addition, the structural limitations resulting from the employment of the passage unit 4 makes an arbitrary multiplication of the box members 1 difficult.

The European patent application EP-A-271830 relates to an electrical facility which comprises a structure as described in the introductory part of claim 1. This known structure enables arrangements in which two adjacent box members are placed in line or in an L-shaped configuration.

### SUMMARY OF THE INVENTION

It is a primary object of this invention to provide a housing structure for substation electrical equipment comprising prefabricated box members which can be transported to, assembled and installed on a substation site with a minimum of labor and costs, and allowing the realization of a structure which is extremely compact and needs a minimum of space for its installation.

It is an additional object of this invention to provide such a housing structure, wherein the number of units of the electrical equipment can easily be multiplied, according to the particular requirement of the substation and even after the installation when the need occurs; since it may be necessary to modify the functional capacity of the substation in accordance with the particular needs thereof, and this even after the installment thereof, it is an advantage that the housing structure allows for an easy modification of the size and capacity of the electrical equipment.

It is still another object of this invention to provide such a housing structure whose configuration or geometrical arrangement can be easily adjusted and adopted to the spacial limitations or requirements of the substation site.

The above objects are accomplished according to this invention by the features of the housing structure described in the characterizing clause of claim 1. Preferred embodiments of the invention are further described in claims 2 to 4.

The present invention, both as to its structure and method of assembly and installation, will best be understood by reference to the following detailed description of the preferred embodiments taken in connection with the accompanying drawings.

### BRIEF DESCRIPTION OF THE DRAWINGS

Fig. 1 is a plan view of a conventional factory-built type housing structure for substation electrical equipment;
Fig. 2 is a front elevational view of the housing structure of Fig. 1;
Fig. 3 is a plan view of an embodiment of the housing structure for substation electrical equipment according to this invention;
Fig. 4 is a side view of the housing structure of Fig. 3;
Fig. 5 is an enlarged partially cut-away view of the connector portion of the housing structure of Fig. 3, showing the detailed structure of the connector portion thereof in a cross section; and
Fig. 6 is a plan view of another embodiment of the housing structure for substation electrical equipment according to this invention.

In the drawings, like reference numerals represent like or corresponding parts.

### DETAILED DESCRIPTION OF THE PREFERRED EMBODIMENTS

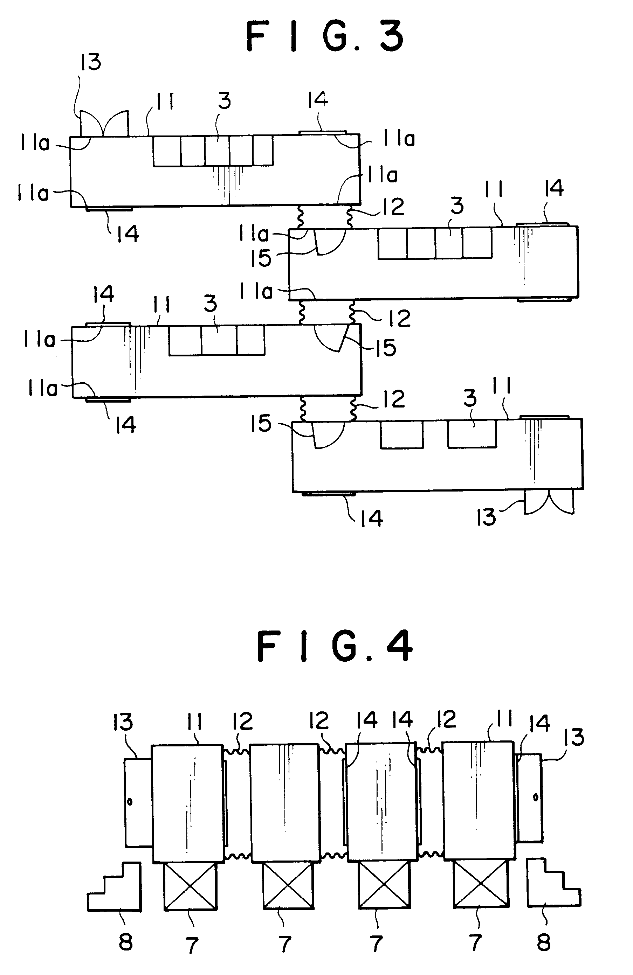

Referring now to Figs. 3 through 5 of the drawings, let us describe an embodiment according to this invention.

Figs. 3 and 4 are a plan and a side view, respectively, of the first embodiment. A plurality (four in the figure) of box members 11, having the form of an identical rectangular parallelepiped, each comprise four side walls, a bottom plate, and a top plate (removed in Fig. 3 to show the interior); each one of the box members 11 are provided with four openings 11a for connection, two each of which are formed symmetrically in each one of the two side walls having a horizontally longer dimension than the other two side walls.

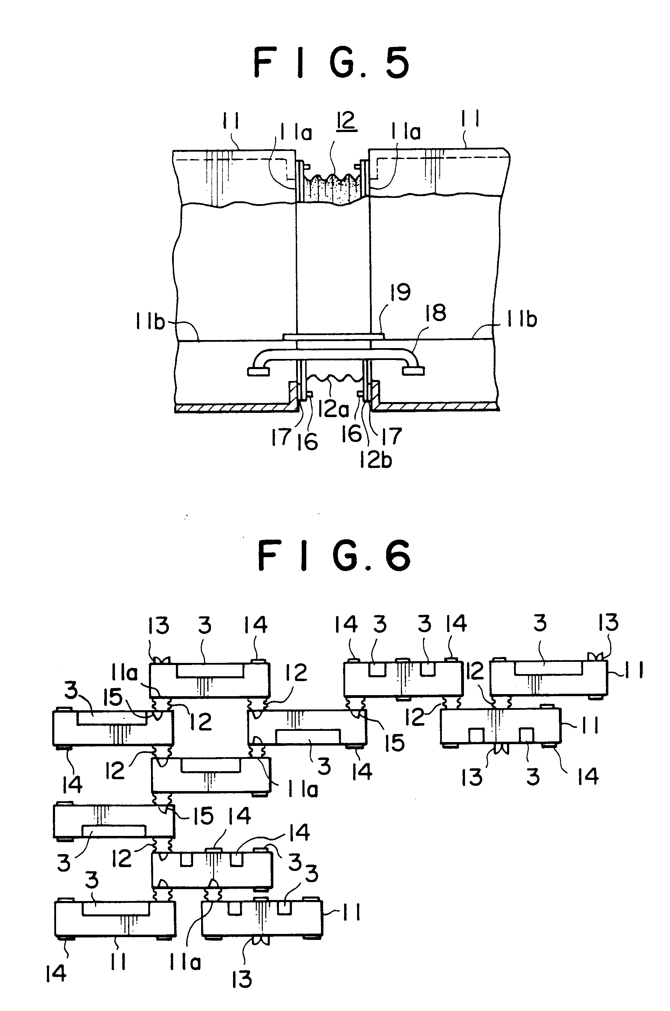

The opposing pairs of connection openings 11a of two adjacent box members 11 are coupled to each other by means of extensible connector members 12, whose structure will be described in detail below in reference to Fig. 5. Those connection openings 11a which are to serve as entrances to the box members 11 (two in number in the figure) are each provided with a double-hinged door 13 which are fitted thereto; the remaining openings 11a which are neither connected to the connector members 12 nor provided with doors 13 are closed by closure plates 14 fitted thereto. One of each opposing pair of the connection openings 11a of the box members 11, which are coupled to each other by a connector member 12, is provided with a door 15. As in the case of the above-described conventional housing structure shown in Figs. 1 and 2, various units of substation electrical equipment 3 for the transmission, transformation, distribution, and switching of the electrical energy, such as the switchgear, monitoring and controlling boards, storage batteries, and air-conditioning equipment, are acccomodated within the box members 11; further, support bases 7 support respective box members 11 installed thereon, while steps 8 (omitted in Fig. 3) are disposed in front of the doors 13 to allow the inspection personnel to enter and get out of the box members 11 thereon.

Fig. 5 shows the structure of one of the connector members 12 in detail. Each connector member 12 comprises a bellows portion 12a, which is capable of being extended and contracted in the longitudinal direction thereof and of being bent by an appreciable amount along the same direction; further, each connector member 12 comprises a pair of flange portions 12b secured to the two ends of the bellows portion 12a. The flange portions 12b of the connector member 12 are fixedly secured, in a water-tight manner, to the circumferential portions of the opposing pair of connection openings 11a of two adjacent box members 11 by means of bolts 16 via packings 17, so as to prevent the intrusion of the rain water. Further, a wiring duct 18, through which the wirings for interconnecting the units of electrical equipment 3 accomodated within the box members 11, extends through each connector member 12 at the bottom portion thereof; in addition, a step plate 19 is disposed over and above the wiring duct 18, so as to bridge the floors 11b of the adjacent box members 11 that are connected by the connector member 12. The step plate 19 allows an easy passage of the inspection or maintenance personnel thereon through the connector member 12. In the case where the interior space of the box members 11 are air-conditioned, an air-conditioning duct (not shown) may be disposed through each one of the connector members 12 to communicate the each pair of box members 11 connected by the connector members 12. Thus, the various units of electrical equipment 3 accomodated separately in respective box members 11 can be operated and maintained in the same manner as in the case where they are accomodated in a single housing unit.

Each one of the prefabricated box members 11 accomodating units of electrical equipment 3 has such exterior dimensions and weight as to allow its easy transportion. Thus, the necessary number of the respective box members 11 accomodating the electrical equipment, which are made and assembled in the factory, are transported to the substation site, together with the connector members 12, the support bases 7, and the steps 8; the doors 13 and 15 and the closure plates 14 may be fitted to the box members 11 before the transportation. Then, the installation and assembly of the above housing structure on the substation site are effected as follows. First, the support bases 7 for the box members 11 are positioned and installed. Thereafter, the box members 11 are set on respective support bases 7, so as to align the opposing pairs of connection openings 11a with each other and to position adjacent box members at a predetermined distance from each other. The box members 11 are thereafter installed and fixedly secured on respective support bases 7. Next, the connector members 12 are attached to the opposing pairs of connection openings 11a at the flange portions 12b thereof. Further, the wiring ducts 18 are disposed at the bottom portion of the connector members 12 to extend therethrough, and step plates 19 are mounted over and above the wiring ducts 18.

It is noted in the above process of assembly and installation that the extensible connector members 12 of a bellows structure allow for a substantial degree of freedom in the positional relationship between the two box members that are connected with each other therethrough; thus, the watertight connection between the box members 11 and the extensible connector members can be ensured without the high precision requirement being imposed on the positioning of the box members 11. As a result, the assembly can be effected easily in a short time with less labor.

Fig. 6 shows another embodiment according to this invention. As shown in the figure, the number of box members 11 may be multiplied arbitrarily. Further, some of the box members 11 may be provided with six connection openings 11a instead of four. The unused openings 11a which are neither connected to the connector members 12 nor provided with entrance doors 13 are closed by closure plates 14 attached thereto. As is apparent from the figure, the unitary structure of the prefabricated box members 11 and the extensible bellows structure of the connector members 12 allow the configuration or the arrangement of the box members 11 and those of the entrance doors 13 to be chosen arbitrarily and adjusted and adapted to the particular needs of the substation; further, the multiplication of the number of box members 11 is easy.

In addition, it is to be noted that the number of the connection openings provided in each box member may be increased; further, although it is preferred that all the box members have the same unitary form to reduce the production cost thereof, some may be modified within the scope of the claimed structure when this is deemed desirable.

## Claims

1. A prefabricated type housing structure for substation electrical equipment, comprising a plurality of prefabricated box members (11) accomodating substation electrical equipment, each one of said box members having a rectangular horizontal cross section and being provided with openings (11a) for connection; extensible connector members (12) of a bellows structure, each connecting an opposing pair of said connection openings of two adjacent box members; a door structure (13) fitted onto at least one of said connection openings of the plurality of box members, allowing inspection personnel to enter into and get out of said plurality of box members therethrough; closure plates (14) fitted onto remaining ones of said connection openings of the box members which are neither connected to said connector members nor provided with the door structure; and wiring ducts (18), each extending through one of said connector members at a bottom portion thereof, wherein wirings which interconnect units of said substation electrical equipment accomodated in said plurality of box members extend through said wiring ducts; characterized in that said box members (11) have at least two connection openings (11a) on each of their side walls having horizontally a longer dimension than the other two side walls, said connection openings of each box member being postioned opposite eachother in the side walls facing each other.

2. A prefabricated type housing structure as claimed in claim 1, wherein said plurality of box members comprise box members provided with six connection openings.

3. A prefabricated type housing structure as claimed in claim 1 or 2, further comprising step plates each of which is disposed over a wiring duct extending through a connector member, so as to form a passage step for the inspection personnel through the connector member.

4. A prefabricated type housing structure as claimed in claim 1 or 2, wherein one of each opposing pair of said connection openings that are mutually connected by a connector member is provided with a door.

## Patentansprüche

1. Gehäusestruktur vom vorgefertigten Typ für eine elektrische Nebenstationsanlage mit einer Mehrzahl vorgefertigter Kastenelemente (11) in denen die elektrische Nebenstationsanlage untergebracht ist, wovon jedes der Kastenelemente einen rechteckigen horizontalen Querschnitt besitzt und mit Öffnungen (11a) für eine Verbindung versehen ist; ausziehbare Verbindungselemente (12) mit Balgenstruktur, wovon eine jede ein Paar der einander gegenüberliegenden Verbindungsöffnungen zweier einander benachbarter Kastenelemente miteinander verbindet; eine Türkonstruktion (13), die an zumindest einer der Verbindungsöffnungen der Mehrzahl von Kastenelementen angebracht ist, welche es einem Inspektionspersonal gestattet, durch die Mehrzahl von Kastenelementen hindurch hinein- und herauszugelangen; Verschlußplatten (14), die an den verbleibenden der Verbindungsöffnungen der Kastenelemente angebracht sind, die weder mit den Verbindungselementen verbunden noch mit der Türkonstruktion versehen sind; und Kabelkanäle (18), wovon sich ein jeder durch eines der Verbindungselemente in deren Bodenabschnitt hindurcherstreckt, wobei Kabel, welche Einheiten der in der Mehrzahl von Kastenelementen untergebrachten elektrischen Nebenstationsanlage untereinander verbinden, sich durch die Kabelkanäle hindurch erstrecken; dadurch gekennzeichnet, daß die Kastenelemente (11) zumindest zwei Verbindungsöffnungen (11a) an jeder ihrer Seitenwände mit horizontal längerer Dimension als die beiden anderen Seitenwände besitzen, welche Verbindungsöffnungen jedes Kastenelementes in den gegeneinandergekehrten Seitenwänden einander gegenüberliegend angeordnet sind.

2. Gehäusestruktur vom vorgefertigten Typ nach Anspruch 1, bei der die Mehrzahl von Kastenelementen mit sechs Verbindungsöffnungen versehene Kastenelemente aufweist.

3. Gehäusestruktur vom vorgefertigten Typ nach Anspruch 1 oder 2, welche ferner Stufenplatten aufweist, von denen eine jede über einem sich durch ein Verbindungselement hindurch erstreckenden Kabelkanal angeordnet ist, so daß sie eine Stufe zum Durchgang für das Inspektionspersonal durch das Verbindungselement bilden.

4. Gehäusestruktur vom vorgefertigten Typ nach Anspruch 1 oder 2, bei der eine von jedem Paare von einander gegenüberliegenden Verbindungsöffnungen, die gegenseitig durch ein Verbindungselement miteinander verbunden sind, mit einer Türe versehen ist.

## Revendications

1. Structure de logement de type préfabriqué pour de l'équipement électrique de sous-station comprenant une pluralité d'éléments de boîtes préfabriqués (11) pour loger de l'équipement électrique de sous-station, chacun desdits éléments de boîtes ayant une forme rectangulaire en section transversale horizontale et étant pourvu d'ouvertures (11a) pour la connexion; des éléments de connexion extensibles (12) à structure en accordéon, chacun connectant une paire desdites ouvertures de connexion opposées de deux éléments de boîtes adjacents; une structure de porte (13) installée sur au moins une desdites ouvertures de connexion de la pluralité d'éléments de boîtes permettant au personnel de surveillance d'entrer dans ladite pluralité d'éléments de boîtes ou d'en sortir à travers cette structure; des plaques de fermeture (14) installées dans les ouvertures restantes dans desdites ouvertures de connexion des éléments de boîtes qui ne sont ni connectées auxdits éléments de connexion ni pourvues de la structure de porte; et des conduites pour conducteurs (18) s'étendant chacune à travers un desdits éléments de connexion dans une partie inférieure de celui-ci, des conducteurs qui connectent entre elles les unités dudit équipement électrique de sous-station logé dans ladite pluralité d'éléments de boîtes passant dans lesdites conduites pour conducteurs; caractérisée en ce que lesdits éléments de boîtes (11) ont au moins deux ouvertures de connexion (11a) sur chacune de leurs parois latérales ayant horizontalement une dimension plus importante que les deux autres parois latérales, lesdites ouvertures de connexion de chaque élément de boîte étant disposées l'une en regard de l'autre, dans les parois latérales se faisant face l'une l'autre.

2. Structure de logement de type préfabriqué selon la revendication 1, dans laquelle ladite pluralité d'éléments de boîtes comprend des éléments de boîtes pourvus de six ouvertures de connexion.

3. Structure de logement de type préfabriqué selon la revendication 1 ou 2, comprenant en outre des plaques de marches, chacune d'entre elles étant disposée au-dessus d'une conduite pour les conducteurs s'étendant à travers un élément de connexion pour former un passage à marches pour le personnel de surveillance à travers l'élément de connexion.

4. Structure de logement de type préfabriqué selon la revendication 1 ou 2, dans laquelle une des deux dites ouvertures de connexion en regard connectées mutuellement par un élément de connexion est pourvue d'une porte.
